Europäisches Patentamt

European Patent Office

Office européen des brevets

(19)

(11) **EP 1 229 496 A2**

(12) **EUROPEAN PATENT APPLICATION**

(43) Date of publication:
07.08.2002 Bulletin 2002/32

(51) Int Cl.7: **G06T 7/60**

(21) Application number: 02001908.9

(22) Date of filing: 30.01.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 02.02.2001 JP 2001026438

(71) Applicant: **MATSUSHITA ELECTRIC INDUSTRIAL
CO., LTD.
Kadoma-shi, Osaka 571-8501 (JP)**

(72) Inventors:
• **Furuyuma, Hiroshi
Kawasaki-shi, Kanagawa 215-0011 (JP)**

• **Nagao, Kenji
Kanagawa 225-0023 (JP)**
• **Yamada, Shin
Kawasaki-shi, Kanagawa 214-0021 (JP)**
• **Akimoto, Toshiaki
Yokohama-shi, Kanagawa 230-0075 (JP)**

(74) Representative: **Balsters, Robert et al
Novagraaf International S.A.
25, avenue du Pailly
1220 Les Avanchets - Geneva (CH)**

(54) **Information terminal apparatus and authenticating system**

(57) Provided are an input unit for inputting the physical information of a user, a physical-information confirming unit for displaying the input physical information and an authenticating unit for authenticating a previously registered user on the basis of the input physical information. The physical-information confirming unit has a display unit and a index display unit for displaying an index, such as a frame, to designate a size or position of the input physical information. The index display unit has a function to confirm a status of the physical information inputted by the user and a function to designate a size or position of physical information when inputting physical information.

FIG.2

EP 1 229 496 A2

**Description**

FIELD OF THE INVENTION

The present invention relates to an information terminal apparatus and authenticating system having a function to carry out personal authentication by the use of physical information of a user.

BACKGROUND OF THE INVENTION

At present, the means for user authentication is classified into two, i.e. access token type and storage data type. The access token type includes smart cards, credit cards and keys while the storage data type includes passwords, user names and personal authentication numbers.

The access token type involves a problem of being readily lost or stolen. Meanwhile, the storage data type is problematic in being forgetful or setting easygoing data in fear of forgetting. The use of combined means of the both enhances security, still leaving the similar problem.

The biometric technology, an art to use bodily features (physical information) as means for personal authentication, possibly solves the foregoing problem concerning mission and remembrance. There are known, as concrete physical information, fingerprints, hand-prints, faces, irises, retinas, voiceprints and so on.

As user authentication utilizing face images, there is known a portable information processing apparatus (Japanese Patent Laid-Open No.137809/2000) which is a portable information processing apparatus equipped with required picture-taking means ( camera) in order to realize the functions unique to the apparatus as in the video phone apparatus, wherein the image data captured through the picture-taking means is utilized to realize security functions.

Meanwhile, in the cellular phone recently in rapid spread or the portable personal computer, the user authenticating technology as in the related art can be utilized by adding an image input and output function and image transmission function.

However, the related art collates the user face data previously registered (or feature parameter extracted from face image data) with the user face image data inputted upon authentication (or feature parameter extracted from face image data) thereby carrying out user authentication. Thus, there exist the following problems.

(1) Problem in recognition accuracy

For example, where extracting physical information of the face by the use of a camera attached on a portable terminal, there is difference in lighting condition, background, camera direction in capturing the face, or distance. Consequently, there is variation in obtaining a recognition result the same in person as the registered image. Namely, the problem arises on increased occasions that the person concerned be refused in authentication as compared to the related-art access token type or storage data type.

(2) Problem of security in recognizing physical information

For example, the problem is to be considered that, when inputting a face image for face recognition, another person instead of the person concerned uses a picture of the person concerned to impersonate as the person concerned.

It is an object of the present invention to provide a physical-information input interface such as for face images in order to solve the foregoing two problems.

SUMMARY OF THE INVENTION

In order to solve the problem, the present invention comprises an input unit for inputting physical information of a user, a display unit for displaying the input physical information and an authenticating unit for personally authenticating a user previously registered on the basis of the input physical information, whereby the display unit displays an index to designate a size and position of the input physical information.

An input interface is provided which allows a user to confirm lighting condition and input face-size and direction deviation by displaying an index for designating a size and position of such input physical information as well as result of the input physical information. This makes it possible to easily adjust lighting condition, camera direction, distance and position of the face or the like, allowing to capture physical information under a condition suited for user authentication.

Meanwhile, a user authenticating system with high accuracy is made possible by comprising: an information terminal apparatus, and a registering server having a learning unit for registering the physical information inputted from the information terminal through a communication network to a database and learning an identification function of each person from the physical information and each pieces of already registered physical information of a database, and a system managing unit for managing the physical information, the identification function of each person and an ID.

An information terminal apparatus of the invention comprises: a display unit for displaying input user physical information and an authenticating unit for personally authenticating a user previously registered on the basis of the physical information, whereby the display unit displays an index to designate a size and a position of the physical information. This makes it possible to correctly input physical information.

Meanwhile, in the information terminal apparatus of the invention, the physical information is any one of a face image of the user or a face image and voice of the user. This allows non-contact input using a camera or mike without requiring an especial input device.

Meanwhile, in the information terminal apparatus of the invention, the index defines any of a contour of a face or a position of both eyes. This provides the operation to input a face image in a size and direction suited for authentication.

Meanwhile, the information terminal apparatus of the invention further comprises: an instructing unit to give an instruction to the user during inputting physical information. This allows the user to properly take a measure to enhance extraction accuracy.

Meanwhile, in the information terminal apparatus of the invention, the instructing unit gives any of an instruction to give a wink, an instruction to change a body direction, an instruction to move a face up and down or left and right, and an instruction to move a position. This makes possible to restrain another person from impersonating as the person concerned by using a picture, improve authentication accuracy by changing the condition of lighting to the face or prevent against the lowering in authentication accuracy resulting from a face direction of up and down or left and right.

Meanwhile, in the information terminal apparatus of the invention, the face image is displayed through conversion into a mirror image. This makes it easy to align the own face image captured through the camera to the center.

Meanwhile, in the information terminal apparatus of the invention, the information terminal apparatus is any of a personal digital assistant and a portable personal computer respectively having communication units and a cellular phone. This makes possible to correctly input physical information at anywhere by a portable terminal.

An authenticating system of the present invention comprises: an information terminal apparatus of the invention; and a registering server having a learning unit for registering the physical information inputted from the information terminal apparatus through a communication network to a database and learning a discriminating function on each person from the physical information and each piece of already registered physical information in a database, and a system managing unit for managing the physical information, the discriminating function and an ID. This enables function as a personal authenticating system for access to a service on a network, e.g. electronic commerce or electronic banking.

Meanwhile, in the authenticating system of the invention, the physical information of a person is updated at a constant time interval. This updates the physical information of a person at a constant time interval. This provides security.

Meanwhile, in the authenticating system of the invention, the registering server prompts each of information terminal apparatus to update the physical information of a person at a constant time interval. This enables authentication with higher security.

BRIEF DESCRIPTION OF THE DRAWINGS

Fig. 1 shows a functional configuration diagram of an information processing apparatus having an authenticating function according to the present invention;

Fig. 2 shows a system configuration of a registering and authenticating system in Embodiment 1 of the invention;

Fig. 3 shows an outside view of a cellular phone with camera in Embodiment 1 of the invention;

Fig. 4 shows a functional configuration diagram of a cellular phone with camera in Embodiment 3 of the invention;

Fig. 5 shows a functional configuration diagram of a cellular phone with authenticating function in Embodiment 1 of the invention;

Fig. 6A shows a registration sequence diagram for explaining a registering process of a face image in Embodiment 1 of the invention;

Fig. 6B shows a registration sequence diagram for explaining a registering process of a voice in Embodiment 2 of the invention;

Fig. 7 shows a flowchart for explaining a face-image extracting process in Embodiment 1 of the invention;

Fig. 8 shows a flowchart for explaining a face-image learning process in Embodiment 1 of the invention;

Fig. 9A shows a recognition sequence diagram for explaining a sequence when the recognizing process is successful in Embodiment 1 of the invention;

Fig. 9B shows a recognition sequence diagram for explaining a sequence when the recognizing process is not successful in Embodiment 1 of the invention;

Fig. 10 shows a flowchart for explaining a face-image recognizing process in Embodiment 1 of the invention;

Fig. 11 shows a functional configuration diagram of a cellular phone with a plurality of authenticating functions in Embodiment 2 of the invention;

Fig. 12 shows a system configuration diagram showing a registering and authenticating system according to Embodiment 2 of the invention;

Fig. 13 is a flowchart for explaining a voice extracting process in Embodiment 2 of the invention;

Fig. 14 shows a flowchart for explaining a voice leaning process in Embodiment 2 of the invention;

Fig. 15 shows a flowchart for explaining an authenticating operation in Embodiment 2 of the invention;

Fig. 16 shows a flowchart for explaining a speaker recognition process in Embodiment 2 of the invention;

Fig. 17 shows a system configuration diagram showing a registering and authenticating system according to Embodiment 3 of the invention;

Fig. 18 shows a recognition sequence diagram for explaining a recognition process in Embodiment 3 of the invention;

Fig. 19 shows a flowchart for explaining a face-image recognizing process in Embodiment 3 of the invention;

Fig. 20 shows a functional configuration diagram of a cellular phone with authentication function according to Embodiment 4 of the invention;

Fig. 21 shows a flowchart for explaining a face-image registering process in Embodiment 4 of the invention;

Fig. 22A is a first example of an input face image in Embodiment 1 of the invention; and

Fig. 22B is a second example of an input face image in Embodiment 1 of the invention.

## DESCRIPTION OF THE PREFERRED EMBODIMENTS

The embodiments of the present invention will be explained below in conjugation with the drawings.

### Embodiment 1

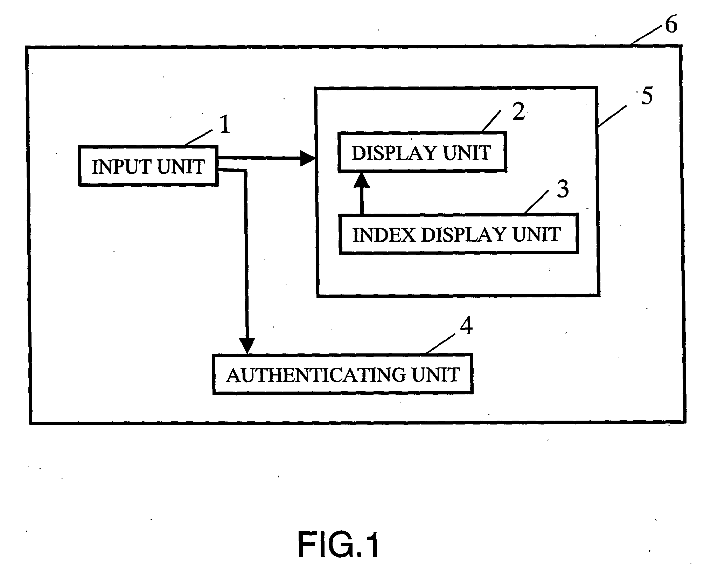

The first embodiment is shown in Fig. 1 presented in the following.

Fig. 1 shows a functional configuration of an information terminal apparatus 6 having authentication functions in the invention. The information terminal apparatus 6 having authentication functions in Fig. 1 is an information terminal apparatus having a personal authenticating function on the basis of physical information, which includes an input unit 1 for inputting physical information, a display unit 2 for displaying the input physical information, and an authenticating unit 4 for authenticating a previously registered user on the basis of the input physical information. The display unit 2 has index display unit 3 for displaying an index, such as a rectangular frame or two dots, to designate a size or position of the input physical information, thus constituting a physical information confirming unit 5 to confirm a status of physical information inputted by the user.

The information terminal apparatus 6 of the invention includes a personal digital assistant (hereinafter, described "PDA"), a cellular phone and a portable personal computer, but is not limited to them.

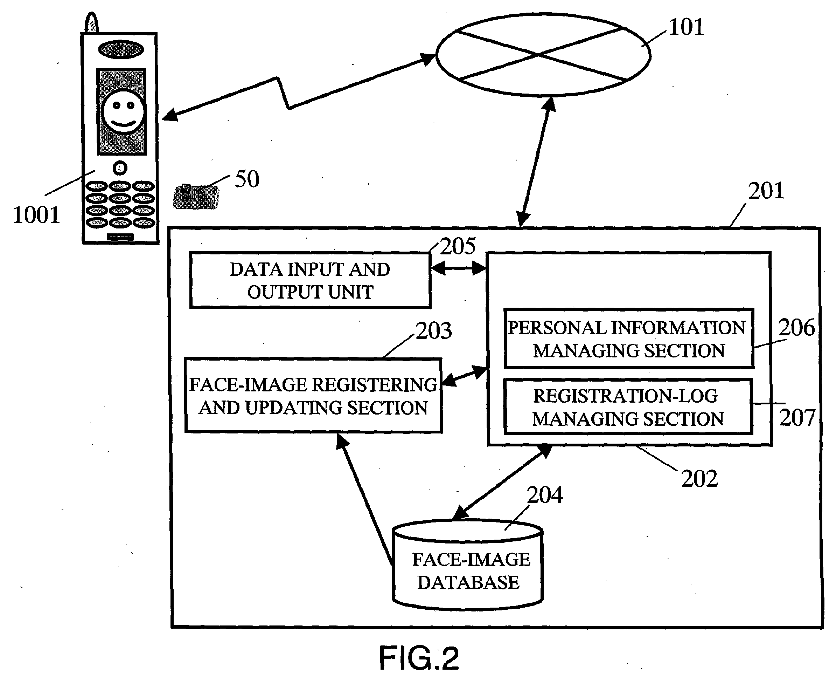

Fig. 2 shows a configuration of a registering and authenticating system for personal authentication due to the face by using a cellular phone 1001, as one example of an information terminal apparatus in Embodiment 1 of the invention, which will be explained below.

This configuration includes a cellular phone 1001 and a registering server 201 that are connected through a network 101. The registering server 201 has a function to learn by the use of an image registered for face authentication. The server 201 is configured with a system managing section 202, a face-image registering and updating section 203, a face-image database 204 and a data input and output section 205. The data input and output section 205 has a function to receive the data transmitted from the cellular phone 1001 and transmit a result of processing of the registering server 201 to the cellular phone 1001.

The system managing section 202 has a function to mange the personal information concerning the registration of face images and to manage the processing of registration, and configured with a personal information managing section 206 and a registration-log managing section 207. The personal information managing section 206 has a function to manage, as personal information, possessor names, cellular phone numbers, utilizer names and user IDs. The registration-log managing section 207 has a function to manage user IDs, registration-image IDs, date of registration, date of update and learning-result IDs. The face-image registering and updating section 203 has a function to learn by the use of a registered face image and seek a function for determining whether an input image is of a person concerned or not. The face-image database 204 has a function to accumulate therein the registered face images and the functions obtained by learning.

Incidentally, an IC card 50 is to be loaded to the cellular phone 1001.

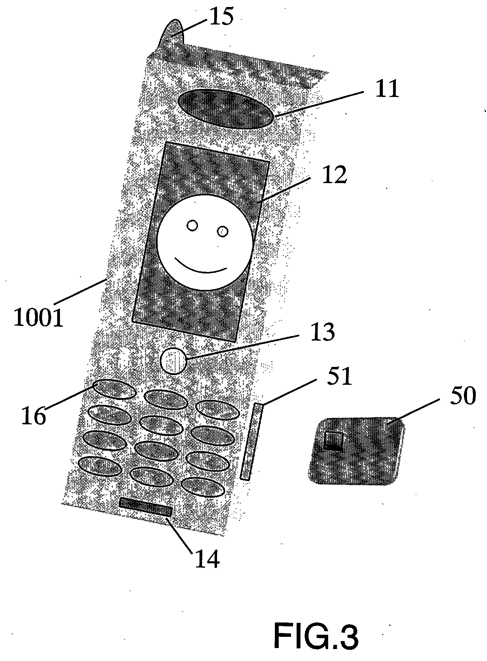

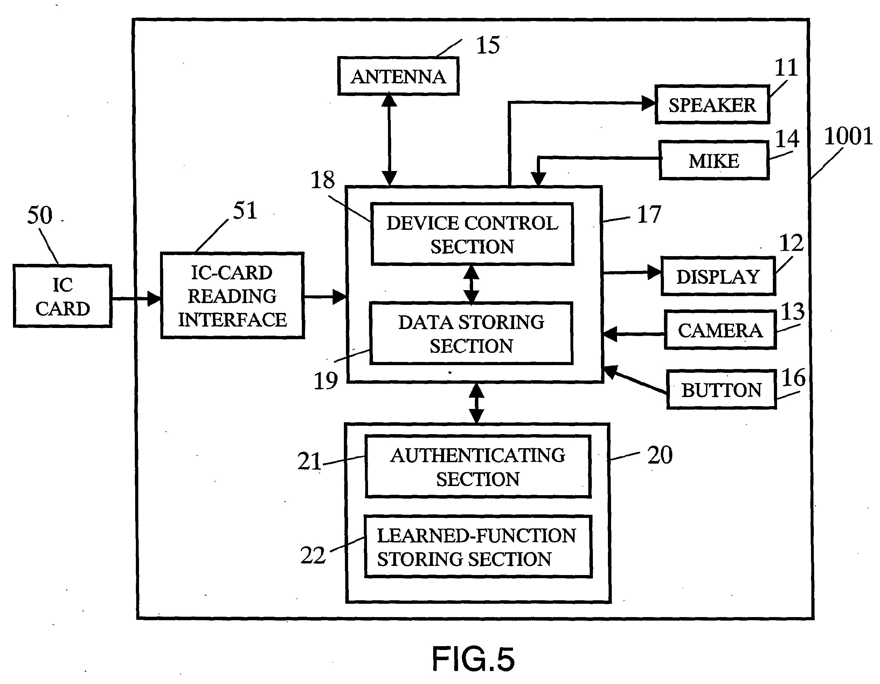

Meanwhile, Fig. 3 is an outside view of a cellular phone with camera 1001 as an information terminal apparatus. In Fig. 3, the cellular phone with camera 1001 is configured with a speaker 11, a display 12, a camera 13 for capturing face images, a mike 14, an antenna 15, buttons 16, an IC card 50 and an interface for IC-card reading 51. The overall data process of the cellular phone with camera 1001 is carried out by a data processing section 17 shown in Fig. 5. The data processing section 17 includes a device control section 18 and a data storing section 19.

Fig. 5 shows a functional configuration of the cellular phone with camera 1001 in Embodiment 1 of the invention.

In Fig. 5, the data processing section 17 has a function to process the data inputted by the camera 13, mike 14, button 16 or IC card 50 through the IC-card-reading interface 51 and output it to the speaker 11, the display 12 or the antenna 15. This processing section 17 is configured with a device control section 18 and a data storing section 19. The device control section 18 not only processes data by using various programs but also controls the devices of the cellular phone 1001. The data storing section 19 can afford to store various programs for use in the device control section 18, the data inputted through the camera 13, mike 14 or button 16 and the data of a result of processing by the device control section 18. The face authenticating section 20 is configured with a learned-function storing section 22 to store a result of learning on a registered image and an authenticating section 21 to authenticate the face image captured through the camera 13 by the use of a registered image read out of the IC card 50 and learning result read from the learned-function storing section 22.

In the cellular phone with personal authentication function 1001 of Fig.5, the camera 13, the display 12, the data processing section 17 and the face authenticating section 20 correspond, respectively, to the input unit 1, the output unit 2, the index display unit 3 and the authenticating unit 4 in Fig. 1.

Explanation is now made on the operation of Embodiment 1 of the invention.

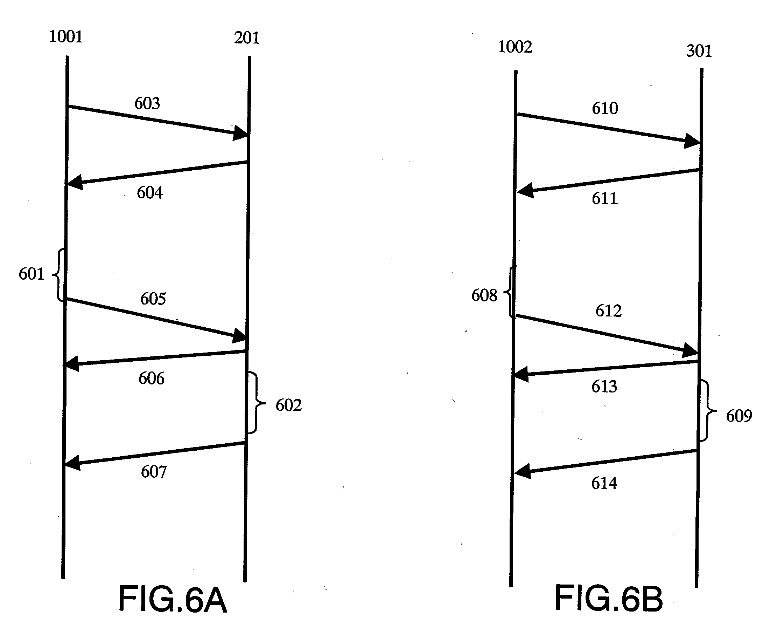

First, the operation of registration is explained using Figs. 6A, 7 and 8. Fig. 6A shows a sequence of registering a face image, including commands of between the cellular phone 1001 and the registering server 201, a face-image extracting process 601 in the cellular phone 1001 and a face-image learning process 602 in the registering server 201.

The face-image extracting process 601 is to extract a face region by template matching. The process of template matching is as follows. A face region is previously extracted out of a plurality of images to prepare, as a standard pattern, a mean vector $X_m$ of the feature vectors comprising shading patterns in the face region image. An input image is taken out such that a center coordinate $(X_c, Y_c: 0 < X_c < M, 0 < Y_c < N)$ of the input image ($N \times M$ pixels) comes to a center of an image to be taken out in a size having vertically n pixels and horizontally m pixels ($N > n, M > m$), and converted into the same size as the standard pattern image. Then, a feature vector $x_i$ of shading pattern is calculated. If the similarity between the standard-pattern feature vector $x_m$ and the input-image feature vector $x_i$ (e.g. reciprocal of a Euclidian distance, hereinafter referred) is equal to or greater than a previously set threshold, it is outputted as a face-image extraction result. Meanwhile, it is possible to provide a function for extracting the eye after extracting face region by the use of a similar technique.

By operating the button 6 of the cellular phone 1001, the device control section 18 reads a registering program out of the data storing section 19 and executes it. However, in order to avoid the operation by a person other than the person concerned, the registering program is read out only when inputting a number memorized only by the person concerned. The device control section 18 transmits a registration request 603 to the registering server 201. Receiving a request acceptance response 604 from the registering server 201, the device control section 18 starts a face-image extracting process 601.

On the other hand, when the registering server 201 receives the registration request 603, the system managing section 202 collates personal information to determine whether new registration or registration information update. In the case of new registration, received personal information is added to newly generate a registration log. Completing a registration preparation, the registering server 201 transmits a request acceptance response 604 containing a registration request acceptance ID to the cellular phone 1001.

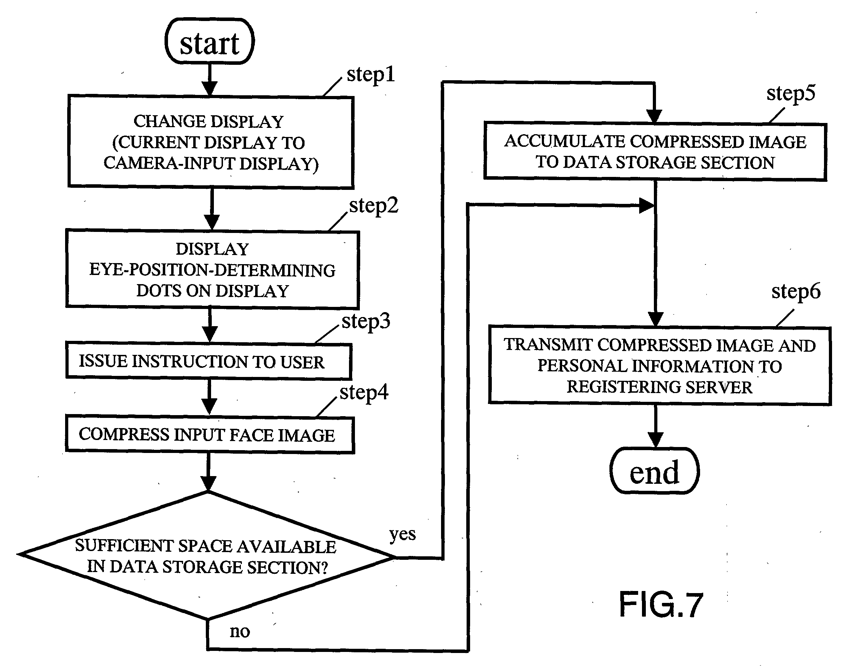

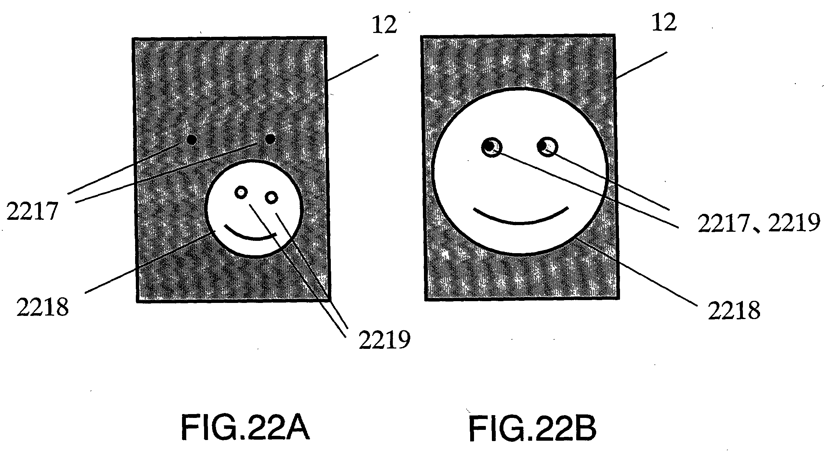

Explanation is made on the face-image extracting process 601 by using Figs. 7, 22A and 22B.

Fig. 7 is a flowchart of the face-image extracting process 601. The device control section 18 changes the display on the display 12 (switches from the current display to camera input display) (step 1). During switching to camera input display, a mirror image inverted left and right of a camera input image is displayed on the display 12. On the display 12 is displayed an index 2217, such as two dots, to determine a position of the face or eye (step 2), and an instruction is issued to put, fully in the screen, the face image of a registrant to be inputted from the camera 13 (step 3). The instruction way is by displaying an instruction on the display 12 or audible instruction using the speaker 11. Besides, the content of instruction includes giving a wink, changing face direction, moving the face vertically, changing a body direction and moving a position.

Fig. 22A is an example of an input face image on an example that the input face image is small and deviated from the index 2217 of two dots or the like. In the face-image extracting process 601, a face region 2218 and eye is extracted. In the case that the distance between the center coordinate 2219 of an extracted eye and the index 2217 is greater than a previously set threshold, an instruction as in the foregoing is issued (step 3). As shown in Fig. 22B, the face-image extracting process 601 and instruction (step 3) are repeated such that the input face image comes to a suited position and size for a recognition process. Note that the index 2217 for determining a position of the face or eye may be by setting a rectangular frame, i.e. there is no limitation provided that an index is given to determine a position.

As in the above, by designating a size of physical information, the input image resolution of physical information can be obtained in a predetermined value required for authentication. Meanwhile, by designating a position of physical information, only physical information as a subject of authentication can be correctly extracted. The effect is obtained that favorable information with less noise is available. By designating the both of size and position, it is possible to obtain physical information that is high in resolution, less in noise and optimal for authentication. Furthermore, by designating them, the size and position of a face image to acquire can be made coincident upon between registration and authentication. This also improves the performance of authentication.

The device control section 18 compresses an input face image (step 4) and stores it once to the data storing section 19 (step 5). The face-image information is transmitted together with the personal information and registration request acceptance ID required for registration to the registering server 201 (step 6). However, where a sufficient storage capacity is not available in the data storing section 19, a storage process is not carried out. Herein, the personal information required for registration refers to the information of under management of the personal information managing section 206.

The registering server 201 when receiving face-image information 605 starts a process of face-image registration.

Explanation is made below on the face-image registration process. The registering server 201 records a face image in a face-image database 204 and transmits a face-image reception response 606 to the cellular phone 1001. Meanwhile, in the registering server 201 transmitted the face-image reception response 606, the system managing section 202 delivers a registered image ID to the face-image registering and updating section 203. The face-image registering and updating section 203 received the registered image ID reads a registered image out of the face-image database 204 to carry out a learning process 602 on it.

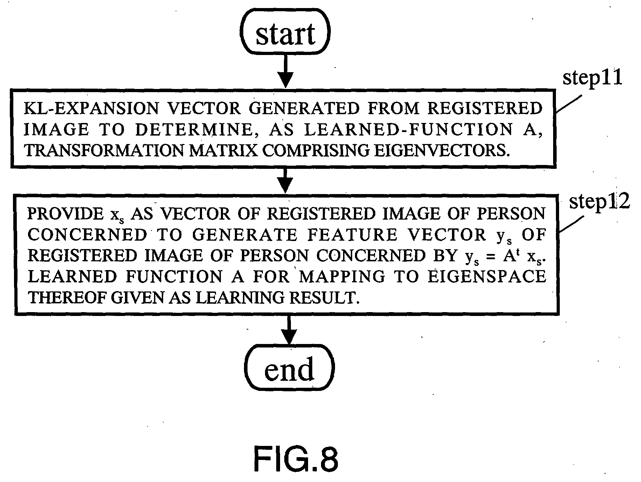

Fig. 8 shows a flowchart of the learning process 602.

In the leaning process 602, at first the vectors generated from registered images are read out of the face-image database 204. Using a covariance matrix W of the feature vectors $x_f$ comprising a plurality of face-image shading patterns, an eigenvector $I_f$ is previously calculated from the Equation (1).

$$(W - \lambda_j I) I_j = 0 \qquad (1)$$

where $\lambda$ is an eigen value and I a unit matrix.

Furthermore, an eigen-value contribution ratio $C_j$ is calculated from Equation (2), to determine as a transformation matrix a matrix $A = (I_1, I_2, ..., I_n)$ comprising the upper-ranking eigenvectors n in the number thereof (hereinafter, this transformation matrix is referred to as a learned function) (step 11).

$$C_j = \lambda_j /tr (W) \qquad (2)$$

where tr(W) signifies a trace of a covariant matrix W.

This learned function is a discriminating function for use to discriminate a user.

Next, a feature vector $y_s$ of a registered image of a person concerned is generated from a feature vector $x_s$ of the registered image of the person concerned and Equation (3). A learned function A for mapping in this eigenspace is taken as a learning result (step 12).

$$y_s = A^t x_s \qquad (3)$$

The process of steps 11 and 12 is referred to as KL expansion (Karhunen-Loeve expansion). Completing the learning process 602, the face-image registering and updating section 203 delivers a leaning result and determining threshold to the system managing section 202. The system managing section 202 provides a learning result ID to the learning result and determining threshold and stores it to the face-image database 204. Furthermore, the system managing section 202 transmits the learning result and determining threshold as a registration completion response 607 to the cellular phone 1001 through the data input and output section 205.

In the cellular phone 1001, the device control section 18 when receiving the face-image reception response 606 from the registering server 201 erases the face image recorded in the data storing section 19. Meanwhile, receiving the registration completion response 607, the data processing section 17 records the received learning result and determining threshold to the leaned-function storing section 22. The device control section 18 informs the user of a completion of registration by using the speaker 11 or display 12. The device control section 18 ends the registration process and returns into a default state. The default state refers to a state similar to the initial state of upon powering on the cellular phone 1001.

Incidentally, the registering server 201 extracts one image of the person concerned from among the images stored in the face-image database 204, and writes a registered image or registered-image feature vector to the IC card 50. At this time, personal information besides the registered image is written to the IC card 50. The IC card 50 is forwarded to the person concerned.

Incidentally, the registering server 201, after elapsing a constant period from the previous registration, writes an newly-input image of the person concerned to the IC card 50. Otherwise, the registering server 201 has a function to prompt, at an interval of elapsing a constant period, the user to input a registered image by way of the cellular phone 1001.

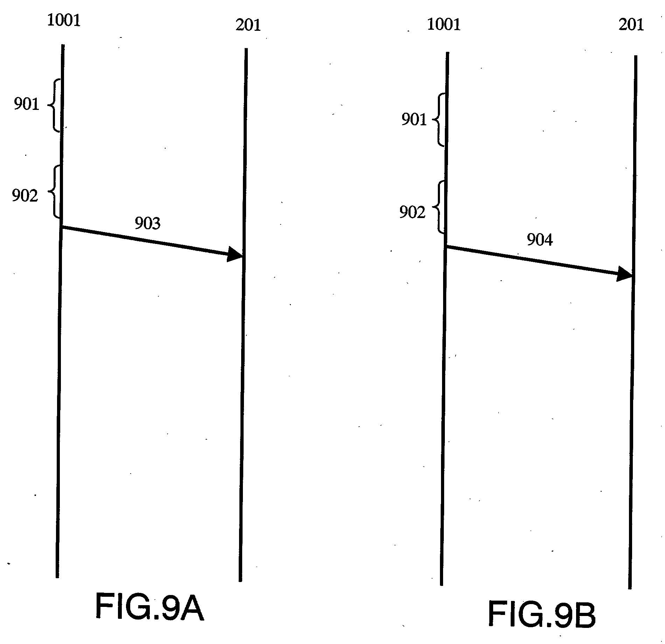

Explanation is now made on the operation of authentication by using Figs. 9A and 9B.

By operating the button 16 of the cellular phone 1001, the device control section 18 reads a recognizing program out of the data storing section 19 and executes it. Meanwhile, the user inserts the IC card 50 recording a registered image to an IC-card-reading interface 51.

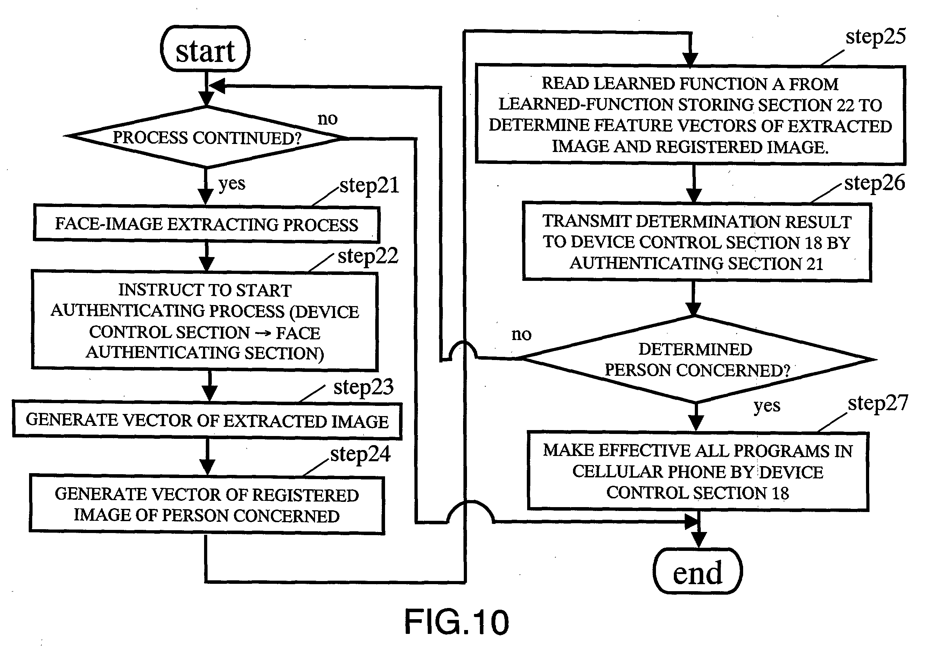

Fig. 10 shows a flowchart of the face-image extracting process 901 and face-image recognizing process 902.

First, a face-image extracting process 901 is carried out similarly to the case of upon registration (step 21).

Then, a face-image recognizing process 902 is carried out using a face image. The device control section 18 instructs the face authenticating section 20 to start a face-image recognizing process 902 (step 22). The instruction for start (step 22) contains a storage position of an extracted face image. The authenticating section 21 generates a vector of the extracted image (step 23).

Similarly, the device control section 18 reads a registered image out of the IC card 50 and generates a vector of the registered image (step 24). Note that this process is not required where a feature vector of a registered image has been generated and recorded in the IC card 50.

The device control section 18 reads a learned function A and determining threshold out of the learned-function storing section 22. Using a registered-image vector $x_s$, extracted-image vector $x_i$ and learned function A, a registered-image feature vector $y_s$ is determined from Equation (3) while an extracted-image feature vector $y_i$ is from Equation (4) (step 25).

$$y_i = A^t x_j \qquad (4)$$

Using the determined registered-image feature vector $y_s$ and extracted-image feature vector $y_i$, a similarity is calculated. Whether the person concerned or not is determined depending upon whether the similarity is greater or smaller than a threshold. The calculation of similarity uses the feature vectors $y_s$, $y_i$, a result of KL expansion on the respective vectors of registered and input images, to determine as e.g. a reciprocal of an Euclidean distance d of an output result. The authenticating section 21 transmits a determination result to the device control section 18 (step 26).

Herein, the Euclidean distance d can be determined by Equation (5).

$$d^2 = \sum_{m=1}^{n} (y_{sm} - y_{im})^2 \qquad (5)$$

In the case of determination as the person concerned, the device control section 18 makes effective all the programs in the cellular phone 1001 (step 27). Where determined as not the person concerned, the process returns to step 21.

Incidentally, although Embodiment 1 determined whether the person concerned or not by using a registered image and threshold of the person concerned, there is a way not using a threshold. The registered images may use a plurality of images of the person concerned and other persons, to determine as the person concerned when the similarity between the extracted image and the person-considered image is the greatest while as another person when the similarity to the other person is the greatest.

The cellular phone having authenticating function 1001 transmits as a successful recognition notification 903 a result of the face-image recognizing process 902 to the registering server 201. Meanwhile, as shown in Fig. 9B, when the face-image recognizing process 902 results in a failure of recognition, the cellular phone having authenticating function 1001 transmits an unsuccessful recognition notification 904 to the registering server 201.

Embodiment 2

Explanation is made on the configuration of Embodiment 2 of the invention.

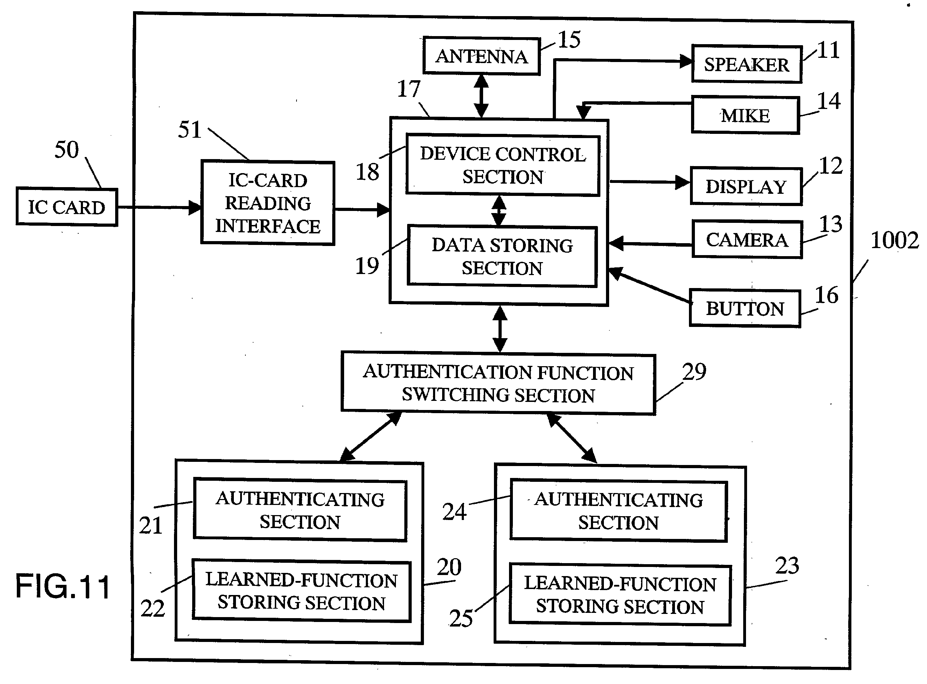

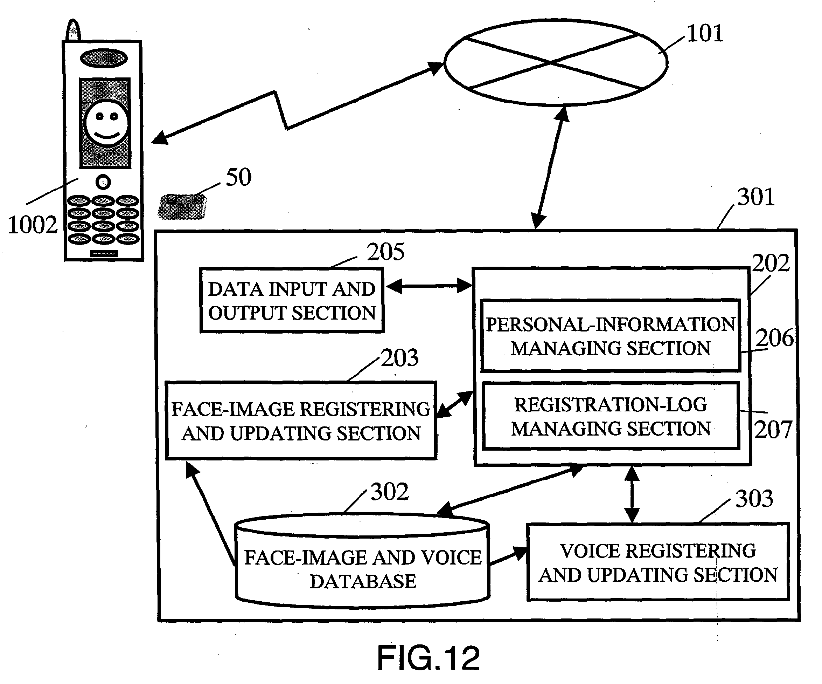

This embodiment is different from Embodiment 1 in the configuration of a cellular phone 1002 and registering server 301. The others than those are of the same configuration. Accordingly, Embodiment 2 is explained only on the structure different from Embodiment 1 by using Figs. 11 and 12.

The difference in configuration between the cellular phone 1002 and the cellular phone 1001 lies in that the cellular phone 1002 is added with a speaker authenticating section 23 for carrying out authentication by using the voice of a speaker. The speaker authenticating section 23 is configured with a learned-function storing section 25 for storing a result of learning on a registered voice and an authenticating section 24 for authenticating a speaker voice inputted through the mike 14 by using a registered voice read in from the IC card 50 by the IC-card reading interface 51 and a learning result read from the learned-function storing section 25.

Meanwhile, the difference in configuration between the registering server 301 and the registering server 201 lies in that the registering server 301 has a face-image and voice database 302 for storing face images and voices instead of the face-image database 204 for storing face images and that there is addition of a voice registering and updating section 303 for carrying out a learning process of a voice.

Explanation is now made on the operation of Embodiment 2 of the invention, using Fig. 6B. The operation for face-image registration is similar to that of Embodiment 1. Explanation is herein made on the operation of registering a voice.

Fig. 6B represents a sequence of voice registration, including a command between the cellular phone 1002 and the registering server 301, a voice extracting process 608 in the cellular phone 1002 and a voice-leaning process 609 in the registering server 301.

By operating the button 16 of the cellular phone 1002, the device control section 18 reads a registering program out of the data storing section 19 and executes it, similarly to the case of upon face-image registration. However, in order to avoid the operation by a person other than the person concerned, the registering program is read out only when inputting a number memorized only by the person concerned.

The device control section 18 transmits a registration request 610 having physical information as a voice to the registering server 301. Receiving a request acceptance response 611 from the registering server 301, the device control section 18 starts a voice extracting process 608. Meanwhile, when the registering server 301 receives a registration request, the system managing section 202 collates personal information to determine whether new registration or registration information update. In the case of new registration, the received personal information is added to newly generate a registration log. Completing a registration preparation, the registering server 301 transmits a request acceptance response 611 containing a registration request acceptance ID to the cellular phone 1002.

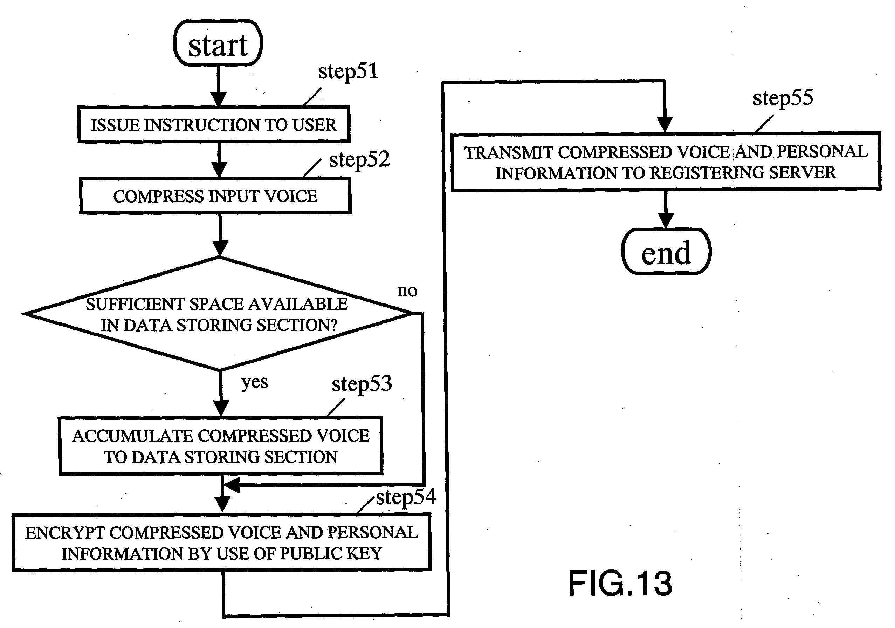

Explanation is made on the voice extracting process 608 by using Fig. 13. The device control section 18 displays an instruction for starting registration on the display 12 or instructs it by a voice through using the speaker 11 (step 51).

A user inputs a voice through the mike 14 according to the instruction. The device control section 18 compresses the input voice (step 52), and stores the compressed voice once to the data storing section 19 if a sufficient capacity is available in the data storing section 19 (step 53). Voice information 612 is encrypted, together with the personal information required in registration and registration request acceptance ID, by the use of a public encryption scheme (step 54), and sent it to the registering server 301 (step 55). However, the storing process is not made where a sufficient storage capacity is not available in the data storing section 19.

The registering server 301 records the voice to the face-image and voice database 302 and transmits a voice reception response 613 to the cellular phone 1002. Meanwhile, in the registering server 301 transmitted the reception response, the system managing section 202 delivers a registered image ID to the voice registering and updating section 303. The voice registering and updating section 303 received the registered image ID reads a registered voice out of the face-image and voice database 302 to perform a voice learning process 609 on it.

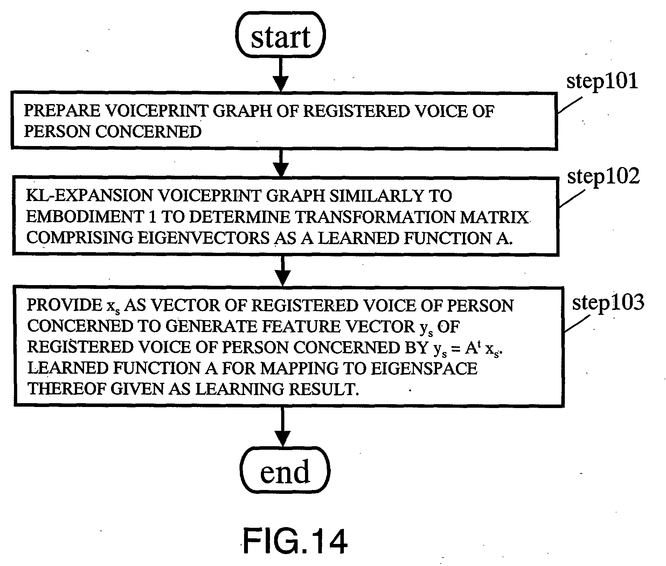

Fig. 14 shows a flowchart of the voice learning process 609. First, prepared is a voiceprint graph on a registered voice read out of the face-image and voice database 302 (step 101). The voiceprint graph refers to the vectors that the chronological data of a voice is dissolved into frequency components and arranged in a chronological order. The words used for a registered voice are selected by a user from those previously prepared. The voiceprint graph is KL-expansion similarly to Embodiment 1 to determine, as a learned function A, a transformation matrix comprising eigenvectors (step 102).

Next, by a vector $x_s$ of a registered voice of a person concerned and Equation (3), a feature vector $y_s$ of the registered voice of the person concerned is generated. A learned function A for mapping in this eigenspace is taken as a learning result (step 103).

Completing the voice learning process 609, the voice registering and updating section 303 delivers a leaning result and determining threshold to the system managing section 202. The system managing section 202 provides a learning result ID to the learning result and determining threshold and stores it to the face-image and voice database 302. Furthermore, the system managing section 202 transmits the learning result and determining threshold as a registration completion response 614 to the cellular phone 1002 through the data input and output section 205.

In the cellular phone 1002, the device control section 18 when receiving a voice reception response 613 from the registering server 301 erases the voice recorded in the data storing section 19. Meanwhile, receiving a registration completion response 614, the data processing section 17 records the received learning result and determining threshold to the learned-function storing section 25. The device control section 18 informs the user of a completion of registration by using the speaker 11 or display 12. The device control section 18 ends the registration process and returns into a default state. The default state refers to a state similar to the initial state of upon powering on the cellular phone 1002.

Incidentally, the registering server 301 extracts one voice (by one word) of the person concerned from among the voices stored in the face-image and voice database 302, and writes a registered voice or registered-voice feature vector to the IC card 50. At this time, personal information besides the registered voice is written to the IC card 50. The IC card 50 is forwarded to the person concerned. At this time, where there is a face image already registered, the registered image if the user desires can be written together with the registered voice onto the one IC card 50.

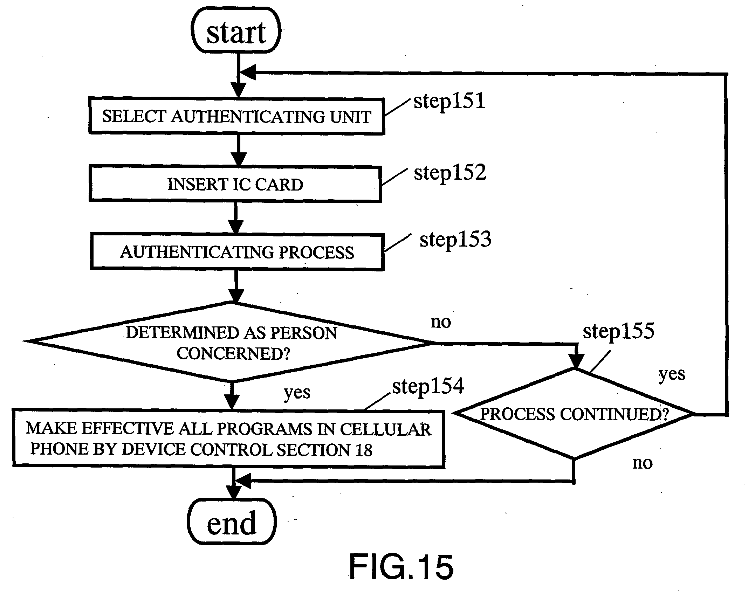

Explanation is now made on the operation of authentication by using Fig. 15. By operating the button 16 of the cellular phone 1002, the device control section 18 reads a recognizing program out of the data storing section 19 and executes it (step 153). Meanwhile, the user inserts the IC card 50 recording a registered image or a registered voice to an IC-card-reading interface 51 (step 152). The user is allowed to select which authentication is to be used (step 151). The selection is made prior to reading out a recognizing program.

In the case that the authentication is successful, the device control section 18 makes effective all the programs in the cellular phone 1002 (step 154). Where the authentication is not successful, determination is made whether to continue the process or not (step 155). When to continue, the process returns to step 151. Because the authentication operation using a face image was explained in Embodiment 1, explanation is herein made on the operation of speaker authentication.

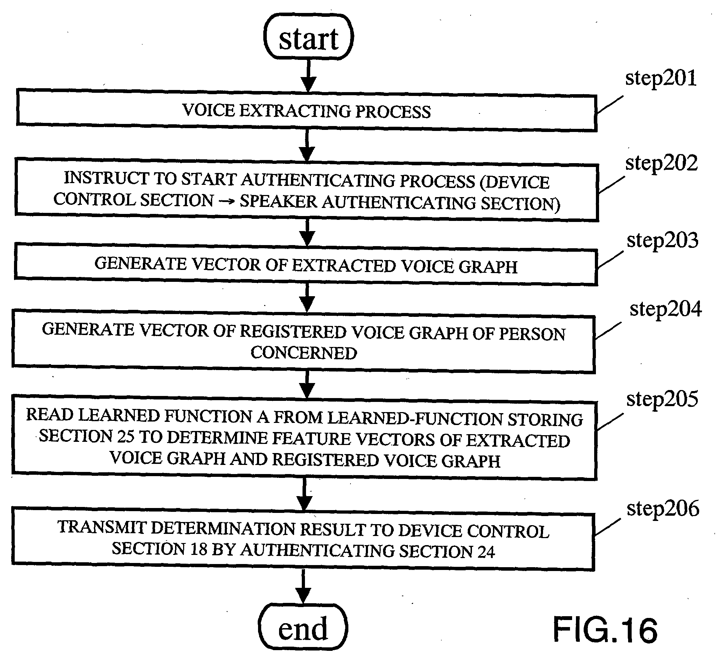

Fig. 16 shows a flowchart of the speaker authentication process.

First, a voice extracting process 608 is carried out similarly to the case of upon registration (step 201). Then, a speaker recognizing process is carried out. The device control section 18 instructs the speaker authenticating section 23 to start an authenticating process (step 202). The instruction for start contains a storage position of an extracted voice. The authenticating section 24 generates a vector of an extracted voice graph (step 203). Similarly, the device control section 18 reads a registered voice out of the IC card 50 and generates a vector of the registered voice (step 204). Note that this process is not required where a feature vector has been generated on a registered voice and recorded in the IC card 50.

The device control section 18 reads a learned function A and determining threshold out of the learned-function storing section 25. From a registered-voice vector and an extracted-voice vector, determined are a registered-voice feature vector and an extracted-voice feature vector by the use of the learned function A (step 205). Using the determined registered-voice feature vector and extracted-voice feature vector, a similarity is calculated. Whether the person concerned or not is determined depending upon whether the similarity is greater or smaller than a threshold. The calculation of similarity uses, e.g. a reciprocal of an Euclidean distance of an output result. The authenticating section 24 transmits a determination result to the device control section 18 (step 206).

Incidentally, the effect of cost reduction is available by making common the algorithm concerning face-image recognition and speaker recognition as in this embodiment.

Furthermore, in the case that authentication is failed and continued (re-authentication), it is expected to improve the disagreement of lighting condition or background upon between registration and authentication as one factor of authentication failure by an instruction to move the body or the like. There is also an effect that authentication be not failed repeatedly due to these factors.

Embodiment 3

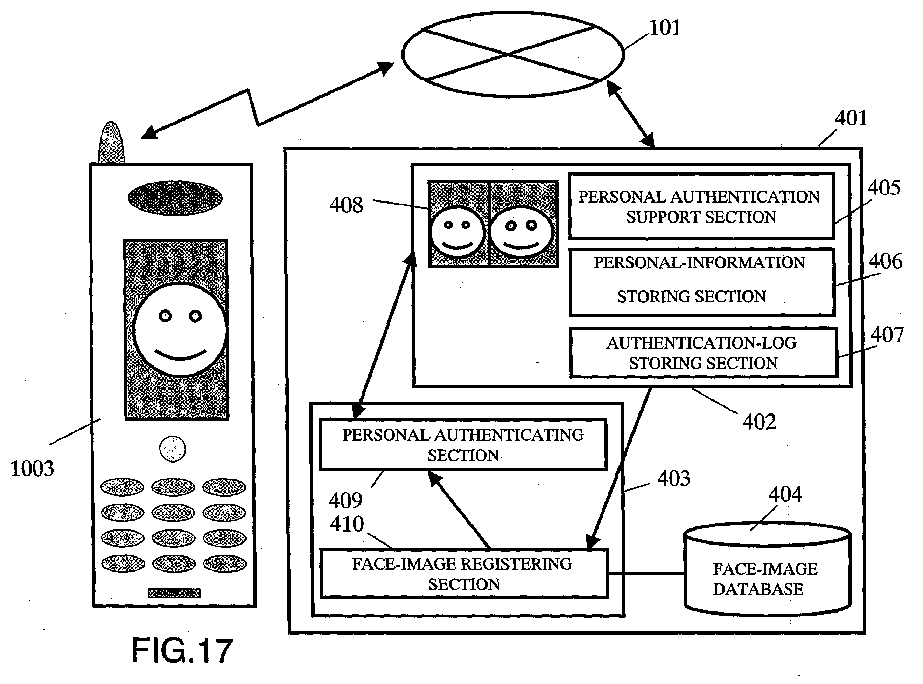

Explanation is made on the configuration of Embodiment 3 of the invention by using Fig.17.

The difference in configuration from Embodiment 1 lies in that the authentication function is provided on a registering and authenticating server 401.

In Fig. 17, a cellular phone 1003 and a registering and authenticating server 401 are connected together by a network 101. The registering and authenticating server 401 is configured with a system managing section 402 to manage the authenticating server 401 overall, a registering and authenticating section 403 to perform registration learning and authentication on a face image and a face-image database 404 to store user face images. The system managing section 402 is configured with a personal-authentication support section 405 to manually perform face-image authentication, a personal-information storing section 406 including a registered-user address, name, telephone number and registration date, an authentication-log storing section 407 including an authentication date and authentication determination, and a display 408. The registering and authenticating section 403 is configured with a personal authenticating section 409 for personal authentication and a face-image registering section 410 for learning process on a face image.

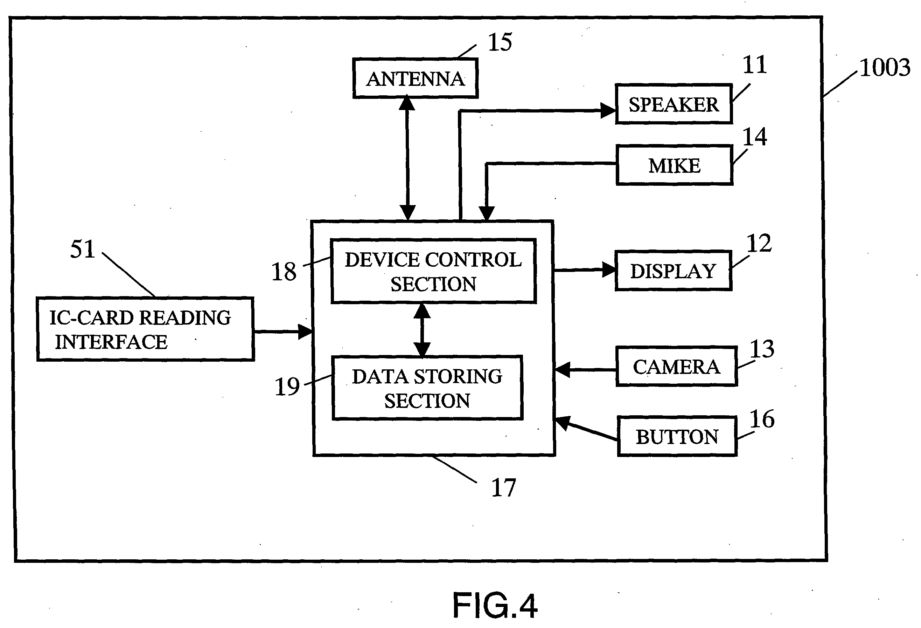

Fig. 4 shows a functional configuration of the cellular phone 1003.

The cellular phone 1003 is configured with a speaker 11, a display 12, a camera 13 for capturing face images, a mike 14, an antenna 15, buttons 16, an IC-card reading interface 51 and a data processing section 17. Furthermore, the data processing section 17 is configured with a device controlling section 18 and a data storing section 19.

Explanation is now made on the operation of Embodiment 3 of the invention. The operation of registration is nearly similar to Embodiment 1. The registering and authenticating server 401 has all the functions of the registering server 201. Herein, description is only on the difference in registering operation from Embodiment 1.

The operation of recording a registered image to the IC card 50, although done in Embodiment 1, is not performed in Embodiment 3. Furthermore, in Embodiment 1, when the device controlling section 18 received a registration completion response, the data processing section 17 recorded a received learning result and determining threshold to the learned-function storing section 22. However, this operation is not made in Embodiment 3.

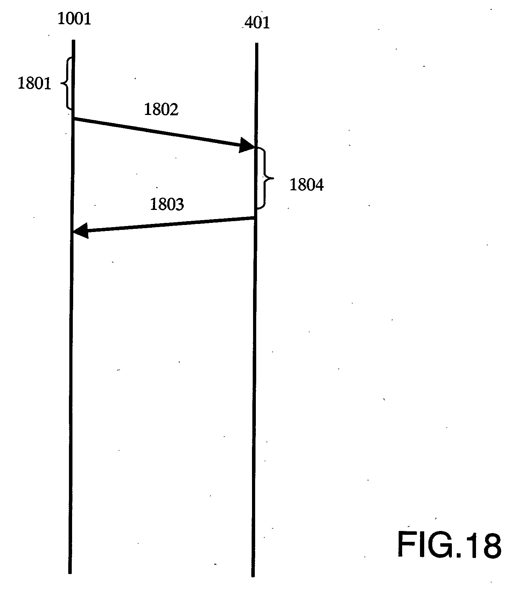

Explanation is now made on the operation of authentication by using Fig. 18. By operating the button 16 of the cellular phone 1001, the device control section 18 reads a recognizing program out of the data storing section 19 and executes it. First, a face-image extracting process 1801 is made similarly to the case of upon registration. Next, the device control section 18 transmits an authentication request 1802 to the registering and authenticating server 401. The authentication request 1802 contains an extracted face image.

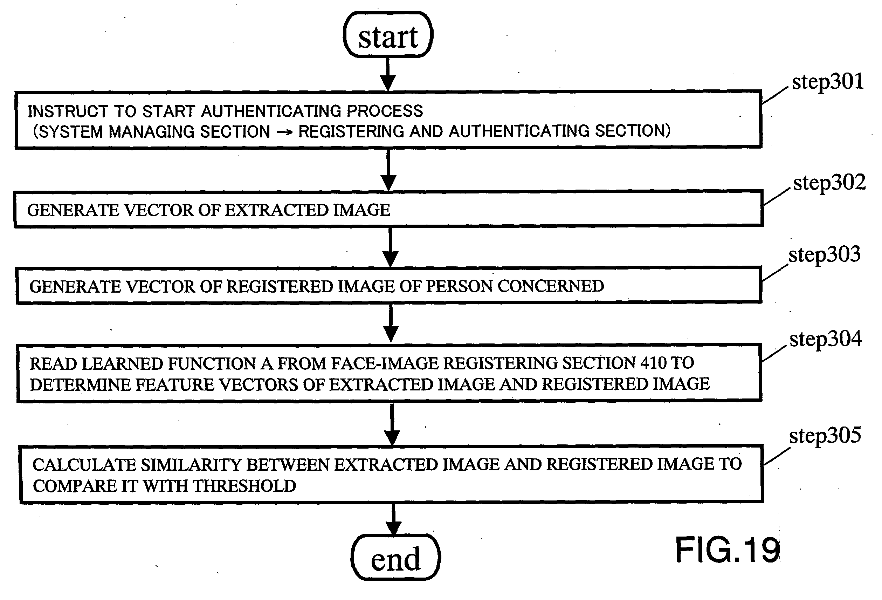

Fig. 19 shows a flowchart of the face-image recognizing process 1804 in the registering and authenticating server 401. The system managing section 402 outputs a received face image to the registering and authenticating section 403 and instructs to start an authenticating process 1804 (step 301). The personal authenticating section 409 generates a vector of an extracted face image (step 302). Meanwhile, the personal authenticating section 409 reads a registered image out of the face-image database 404 and generates a vector of the registered image (step 303). Note that this process is not required where a feature vector of a registered image has been generated and recorded in the face-image database 404.

The personal authenticating section 409 reads a learned function A and determining threshold out of the face-image registering section 410. For a registered image vector and an extracted-image vector, determined are a registered image feature vector and an extracted-image feature vector respectively from Equation (3) and Equation (4) by the use of the learned function A (step 304). Using the determined registered image feature vector and extracted-image feature vector, a similarity is calculated. Whether the person concerned or not is determined depending upon whether the similarity is greater or smaller than a threshold (step 305). The calculation of similarity uses, e.g. a reciprocal of an Euclidean distance of an output result.

Completing the face-image recognizing process 1804, the registering and authenticating server 401 transmits a result thereof as a recognition response 1803 to the cellular phone 1001.

In the case that the authentication is successful, the device control section 18 of the cellular phone 1001 makes effective all the programs in the cellular phone 1001. Meanwhile, in the case that the authentication is not successful, the user is allowed to have three options. Namely, one is to perform again face-image extraction 1801 and authentication, one is to transmit an authentication support request to the registering and authenticating server 401, and one is to cancel face-image authentication 1804 in order for change into ID-inputting authentication. In face-image authentication 1804, there is a possibility that recognition be not successful depending upon lighting condition or face direction. Thus, there is a possibility that authentication be successfully made by changing the lighting condition to perform authentication again. Meanwhile, the delay in response time is caused by performing an authentication support request as hereinafter explained. However, authentication is positively made by a third party at the end of the registering and authenticating server 401, hence being high in security. Meanwhile, where authentication is by ID input, the user is required to take labor and time but positive authentication is to be expected.

Explanation is herein made on the operation upon performing an authentication support request. The authentication support request includes information, such as a cellular phone ID, authentication log and emergency. The registering and authenticating server 401, upon receiving an authentication support request, adds it to the cue of the personal-authentication support section 405. The personal-authentication support section 405 reads an authentication support request out of the cue depending on an emergency. The personal-authentication support section 405 uses an authentication log to display a registered image and input image on the display 408. The person in charge of personal-authentication support visually confirms the image displayed on the display 408. A determination result is transmitted onto the cellular phone 1003 by the use of the cellular phone ID.

Embodiment 4

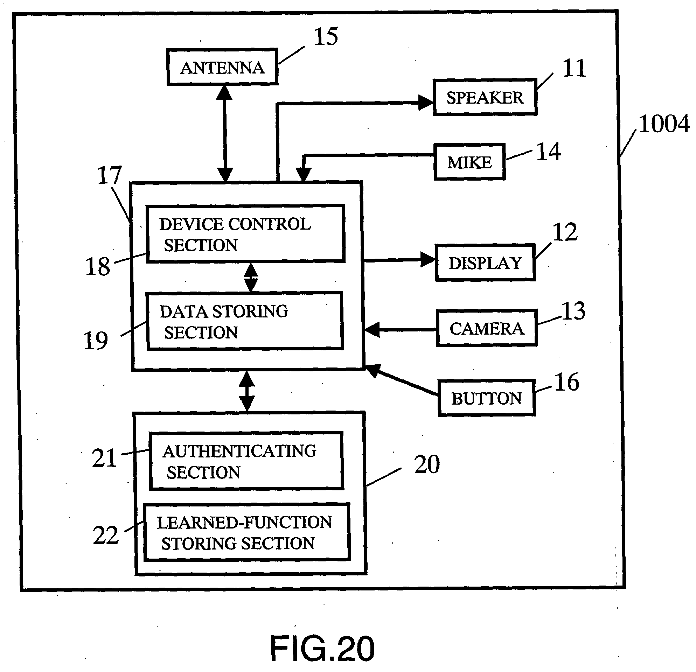

Explanation is made on the configuration of Embodiment 4 of the invention by using Fig. 20.

The present embodiment is characterized by the configuration with only a cellular phone 1004.

In Fig. 20, the cellular phone 1004 is configured with a speaker 11, a display 12, a camera 13 for capturing face images, a mike 14, an antenna 15, buttons 16, a data processing section 17 and a face authenticating section 20. The data processing section 17 is configured with a device control section 18 and a data storing section 19. The device control section 18 not only processes data by using various programs but also controls the devices of the cellular phone 1004.

The data storing section 19 can store the various programs to be used in the device control section 18, the data inputted from the camera 13, mike 14 and button 16, and the result data processed in the device control section 18. The face authenticating section 20 is configured with a learned-function storing section 22 to store a learning function for authentication and an authenticating section 21 to authenticate the face image captured through the camera 13 by the use of a registered image read from the data storing section 19 and learning result read from the learned-function storing section 22.

Explanation is made on the operation of Embodiment 4 of the invention.

First, a learned function is explained. Concerning the learned function, a default function is previously recorded in the learned-function storing section 22 upon factory shipment. The learned function, because the face image of a person concerned is not used in learning, is low in discriminatability.

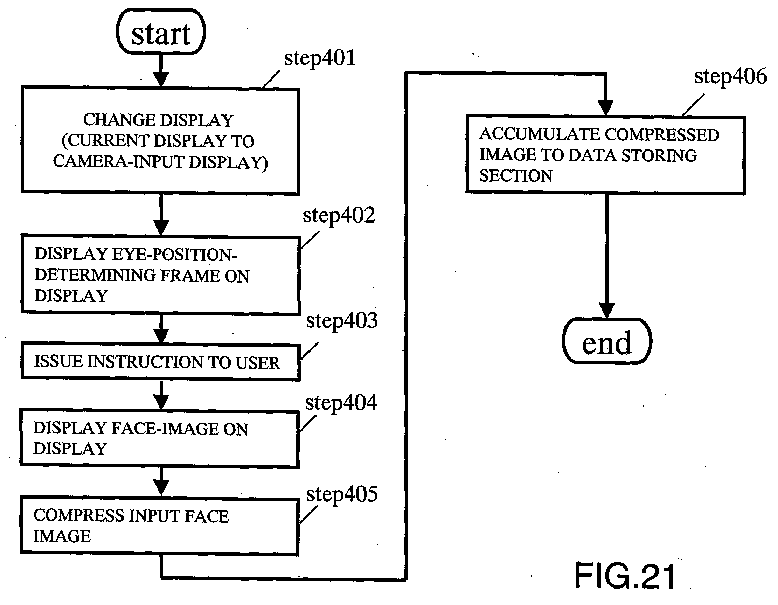

Explanation is now made on the operation of registering a face image by using Fig. 21. By user's operation of the button 16, the device control section 18 reads a registering program out of the data storing section 19 and executes it. Note that, in order to avoid operation by a person other than the person concerned, the registering program is read out only when inputting a number memorized only by a person concerned.

The device control section 18 changes the display on the display 12 (change from the current display into camera-input display) (step 401). On the display 12 is displayed an index, such as a rectangle frame, to determine a position of the eye (step 402). An instruction is issued to put, fully in the rectangle frame, the face image of the registrant to be inputted through the camera 13 (step 403). The instruction way is by displaying an instruction on the display 12 or audible instruction using the speaker 11. Besides, the content of instruction includes giving a wink, changing face direction, moving the face vertically, changing body direction and moving the position. The device control section 18 displays an input face image on the display 12, allowing the user to confirm it (step 404). When a confirmation process is made by user's operation of the button, the device control section 18 compresses the face image (step 405) and stores it to the data storing section 19 (step 406).

The operation of authentication is similar to that of Embodiment 1.

The combination of Embodiment 1 and Embodiment 4 of the invention provides two way of service content setting. One is for a service that authentication is possible by only the cellular phone that can update only the registered image. The user who wishes to improve the recognition rate furthermore can enjoy a service that the learning is made using an image of a person concerned by the configuration of Embodiment 1 to carry out authentication.

According to the invention, when inputting a face image, displayed is an index, such as a frame or two dots, for determining a position of the face or eye. Furthermore, lighting condition or face direction is changed by giving an instruction to change face direction, to give a wink, to move vertically the face, to change body direction or to move a position. This improves the accuracy of face-image extraction. Meanwhile, there is an advantageous effect that, even if another one impersonate as a person concerned while using a picture, it is easy to distinguish between the picture from a physical part.

**Claims**

1. An information terminal apparatus comprising:

   a display unit for displaying input physical information of a user; and
   an authenticating unit for personally authenticating a previously registered user on the basis of the physical information;
   whereby said display unit displays an index to designate a size and position of the physical information.

2. An information terminal apparatus according to claim 1, wherein the physical information is any one of a face image of the user or a face image and voice of the user.

3. An information terminal apparatus according to claim 1, wherein the index defines any of a contour of a face or a position of both eyes.

4. An information terminal apparatus according to any of claims 1 to 3, further comprising an instructing unit to give an instruction to the user during inputting physical information.

5. An information terminal apparatus according to claim 4, wherein said instructing unit gives any of an instruction to give a wink, an instruction to change a body direction, an instruction to move a face up and down or left and right, and an instruction to move a position.

6. An information terminal apparatus according to claim 2, wherein the face image is displayed through conversion into a mirror image.

7. An information terminal apparatus according to any of claims 1 to 6, wherein said information terminal apparatus is any of a personal digital assistant and a portable personal computer respectively having communication units and a cellular phone.

8. An authenticating system comprising:

   (a) an information terminal apparatus according to any of claims 1 to 7; and
   (b) a registering server having

      (b1) a learning unit for registering the physical information inputted from the information terminal through a communication network to a database and learning a discriminating function on each person from the physical information and each piece of already registered physical information in a database, and
      (b2) a system managing unit for managing the physical information, the discriminating function and an ID.

9. An authenticating system according to claim 8, wherein the physical information of a person is updated at a constant time interval.

10. An authenticating system according to claim 9, wherein said registering server prompts each of said information terminal apparatus to update the physical information of a person at a constant time interval.

EP 1 229 496 A2

```
┌──────────────────────────────────────────────────────────────┐  6
│                                                                │
│                                            ┌──────────────┐ 5  │
│                                            │              │    │
│          1                                 │  ┌────────┐2 │    │
│    ┌─────────────┐         ┌──────────────┐│  │        │  │    │
│    │ INPUT UNIT  │────────▶│ DISPLAY UNIT ││  │        │  │    │
│    └─────────────┘         └──────────────┘│  └────────┘  │    │
│          │                        ▲        │      3       │    │
│          │                 ┌──────────────────┐           │    │
│          │                 │ INDEX DISPLAY UNIT│          │    │
│          │                 └──────────────────┘           │    │
│          │                                 └──────────────┘    │
│          │                        4                            │
│          ▼                                                     │
│    ┌───────────────────────┐                                  │
│    │  AUTHENTICATING UNIT   │                                  │
│    └───────────────────────┘                                  │
│                                                                │
└──────────────────────────────────────────────────────────────┘
```

FIG.1

FIG.2

FIG.3

EP 1 229 496 A2

FIG.4

EP 1 229 496 A2

FIG.5

EP 1 229 496 A2

1001       201

603

604

601

605

606

602

607

# FIG.6A

1002       301

610

611

608

612

613

609

614

# FIG.6B

FIG.7

step1 CHANGE DISPLAY (CURRENT DISPLAY TO CAMERA-INPUT DISPLAY)

step2 DISPLAY EYE-POSITION-DETERMINING DOTS ON DISPLAY

step3 ISSUE INSTRUCTION TO USER

step4 COMPRESS INPUT FACE IMAGE

SUFFICIENT SPACE AVAILABLE IN DATA STORAGE SECTION?

yes

no

step5 ACCUMULATE COMPRESSED IMAGE TO DATA STORAGE SECTION

step6 TRANSMIT COMPRESSED IMAGE AND PERSONAL INFORMATION TO REGISTERING SERVER

start

end

```
                          ( start )
                              │
                              ▼
┌────────────────────────────────────────────────────┐   step11
│ KL-EXPANSION VECTOR GENERATED FROM REGISTERED        │
│ IMAGE TO DETERMINE, AS LEARNED-FUNCTION A,           │
│ TRANSFORMATION MATRIX COMPRISING EIGENVECTORS.       │
└────────────────────────────────────────────────────┘
                              │
                              ▼
┌────────────────────────────────────────────────────┐   step12
│ PROVIDE $x_s$ AS VECTOR OF REGISTERED IMAGE OF PERSON │
│ CONCERNED TO GENERATE FEATURE VECTOR $y_s$ OF        │
│ REGISTERED IMAGE OF PERSON CONCERNED BY $y_s = A^t x_s$. │
│ LEARNED FUNCTION A FOR MAPPING TO EIGENSPACE         │
│ THEREOF GIVEN AS LEARNING RESULT.                    │
└────────────────────────────────────────────────────┘
                              │
                              ▼
                          ( end )
```

# FIG.8

EP 1 229 496 A2

1001  201

901

902

903

FIG.9A

1001  201

901

902

904

FIG.9B

EP 1 229 496 A2

start

PROCESS CONTINUED? — no

yes → step21

FACE-IMAGE EXTRACTING PROCESS

step22

INSTRUCT TO START AUTHENTICATING PROCESS (DEVICE CONTROL SECTION → FACE AUTHENTICATING SECTION)

step23

GENERATE VECTOR OF EXTRACTED IMAGE

step24

GENERATE VECTOR OF REGISTERED IMAGE OF PERSON CONCERNED

step25

READ LEARNED FUNCTION A FROM LEARNED-FUNCTION STORING SECTION 22 TO DETERMINE FEATURE VECTORS OF EXTRACTED IMAGE AND REGISTERED IMAGE.

step26

TRANSMIT DETERMINATION RESULT TO DEVICE CONTROL SECTION 18 BY AUTHENTICATING SECTION 21

no — DETERMINED PERSON CONCERNED? — yes

step27

MAKE EFFECTIVE ALL PROGRAMS IN CELLULAR PHONE BY DEVICE CONTROL SECTION 18

end

FIG.10

FIG.11

EP 1 229 496 A2

FIG.12

EP 1 229 496 A2

start

ISSUE INSTRUCTION TO USER — step51

COMPRESS INPUT VOICE — step52

SUFFICIENT SPACE AVAILABLE
IN DATA STORING SECTION? — no

yes — step53

ACCUMULATE COMPRESSED VOICE
TO DATA STORING SECTION

step54

ENCRYPT COMPRESSED VOICE AND PERSONAL
INFORMATION BY USE OF PUBLIC KEY

step55

TRANSMIT COMPRESSED VOICE AND PERSONAL
INFORMATION TO REGISTERING SERVER

end

FIG.13

EP 1 229 496 A2

EP 1 229 496 A2

```
                              ┌─────────┐
                              │  start  │
                              └─────────┘
                                   │
                                   ▼
        ┌──────────────────────────────────────────────────┐  step101
        │ PREPARE VOICEPRINT GRAPH OF REGISTERED VOICE OF   │
        │ PERSON CONCERNED                                  │
        └──────────────────────────────────────────────────┘
                                   │
                                   ▼
        ┌──────────────────────────────────────────────────┐  step102
        │ KL-EXPANSION VOICEPRINT GRAPH SIMILARLY TO        │
        │ EMBODIMENT 1 TO DETERMINE TRANSFORMATION MATRIX   │
        │ COMPRISING EIGENVECTORS AS A LEARNED FUNCTION A.  │
        └──────────────────────────────────────────────────┘
                                   │
                                   ▼
        ┌──────────────────────────────────────────────────┐  step103
        │ PROVIDE xs AS VECTOR OF REGISTERED VOICE OF PERSON│
        │ CONCERNED TO GENERATE FEATURE VECTOR ys OF        │
        │ REGISTERED VOICE OF PERSON CONCERNED BY ys = At xs.│
        │ LEARNED FUNCTION A FOR MAPPING TO EIGENSPACE      │
        │ THEREOF GIVEN AS LEARNING RESULT.                 │
        └──────────────────────────────────────────────────┘
                                   │
                                   ▼
                              ┌─────────┐
                              │   end   │
                              └─────────┘
```

The third box reads: PROVIDE $x_s$ AS VECTOR OF REGISTERED VOICE OF PERSON CONCERNED TO GENERATE FEATURE VECTOR $y_s$ OF REGISTERED VOICE OF PERSON CONCERNED BY $y_s = A^t x_s$. LEARNED FUNCTION A FOR MAPPING TO EIGENSPACE THEREOF GIVEN AS LEARNING RESULT.

# FIG.14

EP 1 229 496 A2

```
                    ┌─────────┐
                    │  start  │
                    └────┬────┘
                         │
                         ▼
        ┌──────────────────────────────┐
        │  SELECT AUTHENTICATING UNIT   │────── step151
        └───────────────┬──────────────┘
                        │
                        ▼
        ┌──────────────────────────────┐
        │        INSERT IC CARD         │────── step152
        └───────────────┬──────────────┘
                        │
                        ▼
        ┌──────────────────────────────┐
        │     AUTHENTICATING PROCESS    │────── step153
        └───────────────┬──────────────┘
                        │
                        ▼
              ◇─────────────────────◇            no        step155
               DETERMINED AS PERSON  ──────────────────────┐
                   CONCERNED?                                │
              ◇─────────────────────◇                       ▼
                        │ yes          step154       ◇──────────────────◇  yes
                        ▼                              PROCESS CONTINUED? ───┐
        ┌──────────────────────────────┐             ◇──────────────────◇   │
        │ MAKE EFFECTIVE ALL PROGRAMS  │                      │ no          │
        │ IN CELLULAR PHONE BY DEVICE  │                      │             │
        │     CONTROL SECTION 18       │                      │             │
        └───────────────┬──────────────┘                     │
                        │◄───────────────────────────────────┘
                        ▼
                    ┌─────────┐
                    │   end   │
                    └─────────┘
```

## FIG.15

```
                    ( start )
                        │
                        ▼
┌──────────────────────────────────────────────────┐   step201
│          VOICE EXTRACTING PROCESS                  │
└──────────────────────────────────────────────────┘
                        │
                        ▼
┌──────────────────────────────────────────────────┐   step202
│  INSTRUCT TO START AUTHENTICATING PROCESS (DEVICE  │
│  CONTROL SECTION → SPEAKER AUTHENTICATING SECTION) │
└──────────────────────────────────────────────────┘
                        │
                        ▼
┌──────────────────────────────────────────────────┐   step203
│    GENERATE VECTOR OF EXTRACTED VOICE GRAPH        │
└──────────────────────────────────────────────────┘
                        │
                        ▼
┌──────────────────────────────────────────────────┐   step204
│  GENERATE VECTOR OF REGISTERED VOICE GRAPH OF PERSON│
│                  CONCERNED                          │
└──────────────────────────────────────────────────┘
                        │
                        ▼
┌──────────────────────────────────────────────────┐   step205
│  READ LEARNED FUNCTION A FROM LEARNED-FUNCTION STORING│
│  SECTION 25 TO DETERMINE FEATURE VECTORS OF EXTRACTED│
│     VOICE GRAPH AND REGISTERED VOICE GRAPH          │
└──────────────────────────────────────────────────┘
                        │
                        ▼
┌──────────────────────────────────────────────────┐   step206
│  TRANSMIT DETERMINATION RESULT TO DEVICE CONTROL   │
│    SECTION 18 BY AUTHENTICATING SECTION 24         │
└──────────────────────────────────────────────────┘
                        │
                        ▼
                     ( end )
```

FIG.16

FIG.17

EP 1 229 496 A2

Labels in figure: 101, 401, 405, 408, PERSONAL AUTHENTICATION SUPPORT SECTION, 406, PERSONAL-INFORMATION STORING SECTION, 407, AUTHENTICATION-LOG STORING SECTION, 402, 1003, PERSONAL AUTHENTICATING SECTION, 409, 410, 403, FACE-IMAGE REGISTERING SECTION, 404, FACE-IMAGE DATABASE

FIG.18

EP 1 229 496 A2

```
                              ┌─────────┐
                              │  start  │
                              └─────────┘
                                   │
                                   ▼
┌──────────────────────────────────────────────────────────────┐  step301
│ INSTRUCT TO START AUTHENTICATING PROCESS                       │
│ (SYSTEM MANAGING SECTION → REGISTERING AND AUTHENTICATING SECTION) │
└──────────────────────────────────────────────────────────────┘
                                   │
                                   ▼
┌──────────────────────────────────────────────────────────────┐  step302
│ GENERATE VECTOR OF EXTRACTED IMAGE                             │
└──────────────────────────────────────────────────────────────┘
                                   │
                                   ▼
┌──────────────────────────────────────────────────────────────┐  step303
│ GENERATE VECTOR OF REGISTERED IMAGE OF PERSON CONCERNED        │
└──────────────────────────────────────────────────────────────┘
                                   │
                                   ▼
┌──────────────────────────────────────────────────────────────┐  step304
│ READ LEARNED FUNCTION A FROM FACE-IMAGE REGISTERING SECTION 410 TO │
│ DETERMINE FEATURE VECTORS OF EXTRACTED IMAGE AND REGISTERED IMAGE │
└──────────────────────────────────────────────────────────────┘
                                   │
                                   ▼
┌──────────────────────────────────────────────────────────────┐  step305
│ CALCULATE SIMILARITY BETWEEN EXTRACTED IMAGE AND REGISTERED IMAGE TO │
│ COMPARE IT WITH THRESHOLD                                      │
└──────────────────────────────────────────────────────────────┘
                                   │
                                   ▼
                              ┌─────────┐
                              │   end   │
                              └─────────┘
```

FIG.19

FIG.20

EP 1 229 496 A2

step406

ACCUMULATE COMPRESSED IMAGE TO DATA STORING SECTION

end

FIG.21

step401

start

CHANGE DISPLAY (CURRENT DISPLAY TO CAMERA-INPUT DISPLAY)

step402

DISPLAY EYE-POSITION-DETERMINING FRAME ON DISPLAY

step403

ISSUE INSTRUCTION TO USER

step404

DISPLAY FACE-IMAGE ON DISPLAY

step405

COMPRESS INPUT FACE IMAGE

FIG.22A          FIG.22B

EP 1 229 496 A2